**Europäisches Patentamt**

(19) **European Patent Office**

**Office européen des brevets**

(11) Publication number: **0 001 358**
**B1**

(12) **EUROPEAN PATENT SPECIFICATION**

(45) Date of publication of patent specification: **12.05.82**

(21) Application number: **78300408.8**

(22) Date of filing: **21.09.78**

(51) Int. Cl.³: **F 23 C 11/02, F 24 H 9/18, B 01 J 8/26**

(54) Method and apparatus for burning a solid, semi-solid and/or fluid fuel in a fluidized bed.

(30) Priority: **23.09.77 GB 3973977**

(43) Date of publication of application:
**04.04.79 Bulletin 79/7**

(45) Publication of the grant of the patent:
**12.05.82 Bulletin 82/19**

(84) Designated Contracting States:
**BE DE FR GB NL**

(56) References cited:
**DE - A - 1 189 670**
**FR - A - 2 117 494**
**GB - A - 1 305 459**
**GB - A - 1 425 704**
**GB - A - 1 461 411**
**US - A - 3 551 100**
**US - A - 3 625 164**
**US - A - 3 648 380**
**US - A - 3 702 595**
**US - A - 3 717 700**

(73) Proprietor: **Exxon Research and Engineering Company**
**P.O.Box 390 200 Park Avenue**
**Florham Park New Jersey 07932 (US)**

(72) Inventor: **Moss, Gerald**
**"Trevose" Sarajac Avenue East Challow**
**Wantage Oxfordshire (GB)**

(74) Representative: **Somers, Harold Arnold et al,**
**5 Hanover Square**
**London W1R OHQ (GB)**

Courier Press, Leamington Spa, England.

## Method and apparatus for burning a solid, semi-solid and/or fluid fuel in a fluidized bed

The present invention relates to a method and apparatus for burning a solid, semi-solid and/or fluid fuel in a fluidized bed.

It has already been proposed to burn solid fuels, such as coal, in relatively shallow beds of non-combustible particles (e.g. sand, ash) which are fluidized by an upwardly-passing combustion-supporting gas (e.g. air) by feeding the solid fuel in a suitable form onto the top surface of one end of the bed, and removing spent fuel (e.g. ash) and bed material from the bed, fresh bed material being added if necessary to maintain the inventory of bed material. When coal or other solid fuel is burned in this way, the fluidized bed serves the same purpose as a continuous mechanical stoker, and it can be employed to fire a furnace or boiler in more or less the same way as a mechanical stoker.

UK patent specification No. 1425704 describes the combustion of fuel in a single fluidized bed having a central part which is deeper than the peripheral part.

Primary air is passed into the bottom of the deep part of the bed where it gasifies fuel supplied thereto. Secondary air is passed into the top part of the bed for complete combustion of the combustible gaseous products generated in the deep part, and heat is recovered by heat recovery tubes immersed in the top part of the bed. The secondary air is supplied at a lower pressure than that necessary for the primary air thereby economizing in operating costs.

For a given heat output, equipment designed for burning a fluid fuel (e.g. oil) is usually more compact than equipment designed for burning a solid fuel (e.g. coal). Moreover, it is not usually convenient and/or efficient to burn a solid fuel in equipment designed for the combustion of a fluid fuel.

The method and apparatus of the present invention substantially avoid the foregoing drawbacks, and provide enhanced utility and versatility.

In one aspect, the present invention provides a method of at least partially burning a solid, semi-solid and/or fluid fuel employing a fluidized bed of particles in which the fluidized bed has a first part which is relatively deep and is fluidized by a first combustion-supporting gas and a second part which is relatively shallow and fluidized by a second combustion-supporting gas, the method comprising passing the fuel to the said first part of the bed in a stoichiometric excess relative to the first combustion-supporting gas so that the fuel is partially combusted within the first part of the fluidized bed at an elevated part-combustion temperature with the production of combustible gas phase materials above the said first part of the bed, wherein the top levels of the first and second parts of the fluidized bed are at substantially the same level and wherein said partial combustion within the first part of the bed additionally produces non-volatile combustible fuel material associated with and/or mixed with the bed particles in the first part of the bed, and wherein the method further comprises causing particles to pass from the said first part of the bed to the second part of the bed, furnishing the second combustion-supporting gas to the said second part of the bed in at least the stoichiometric amount for substantially complete combustion of non-volatile combustible fuel material associated with and/or mixed with the bed particles which have been caused to pass from the first part of the bed to the second part of the bed so that the said non-volatile fuel material is substantially completely burned in the second part of the bed at an elevated fuel burning temperature.

In another aspect, the invention provides apparatus for at least partially burning a solid, semi-solid and/or fluid fuel employing a fluidized bed of particles, comprising containing means defining a volume for containing a bed of fluidizable particles, a first distributor for passing a first combustion-supporting gas into a first part of the bed volume at a first level of the apparatus, a second distributor for passing a second combustion-supporting gas into a second part of the bed volume at a second level of the apparatus above the first level, and means operable for passing fuel to the first part of the bed volume in a stoichiometric excess relative to the first combustion-supporting gas so that, during operation, the fuel is partially burned in the first part of the bed volume to produce combustible gas phase materials, the apparatus having the combination comprising means for defining or regulating the height of the top level of the bed volume so that the top levels of the first and second parts of the bed volume are substantially at the same height whereby, during operation, the partial combustion of fuel in the first part of the bed volume produces combustible gas phase materials above the said top level of the said first bed part, means operable for causing particles to pass from the first bed volume part to the second bed volume part, and gas regulating means operable for regulating the rate of supply of second combustion-supporting gas to the second bed volume part for substantially completely burning therein non-volatile fuel material associated and/or mixed with bed particles which have been caused to pass from the first bed volume part to the second bed volume part.

Preferably, at least some of the combustible gas phase materials from above the top level of the first part of the bed are mixed with combustion-supporting gas for substantially completely burning at least some of the combustible gas phase materials. Such burning of the combustible gas-phase materials may be effected above the first part of the bed or above the second part of the bed, or above both parts of the bed, or at any other convenient location.

Preferably, bed particles are withdrawn or discharged from below the top level of the second part of the bed and particles are added to the first part of the bed to maintain the top level at a substantially constant height.

Many fuels contain impurities which it is desirable to avoid discharging to the environment. Sulfur is regarded as the principal impurity and is usually present in the highest concentrations relative to other impurities, and in the practice of the invention, it may be fixed in the bed material by using bed particles comprising a substance which chemically reacts with sulfur to form a solid compound. A preferred substance is calcium oxide which may be used as such or obtained by passing into the fluidized bed particles of limestone or more preferably, dolomite, which are calcined at the bed temperature to give active CaO-containing particles at the operating temperatures. The fluidized bed may also contain other materials such as ash, and/or sand.

Thus, in one embodiment of the invention, the fuel passed to the first part of the bed is a sulfur-comprising fuel and the particles in the first part of the bed comprise calcium oxide at the operating conditions of the first bed part whereby at least some of the sulfur of the fuel is fixed in the particles in the first bed part as calcium sulfide, and the temperature of the second bed part is regulated to be such that calcium sulfide in particles which pass to the second bed part is converted to calcium sulfate with substantially no liberation of sulfur oxide. Depending to some extent on the composition of the CaO-containing particles, other substances such as nickel, vanadium and sodium, may also be retained in the particles.

The desulfurisation of sulfur-containing fluid fuels is relatively easily effected when such fuel is passed into the first bed part below the top surface of the bed since the fuels initially crack at the bed temperatures and in the course of (part) oxidation liberate sulfur-containing moieties which contact and react with the CaO (or other sulfur-fixing substance) to give, e.g. the corresponding sulfide, e.g. CaS. However, solid fuels are more difficult to desulfurise in this way since there is less crackable material in solid fuels giving rise to reactive sulfur moieties, and moreover, solid fuels such as coal, tend to "float" on the fluidised bed thereby reducing the amount of contact between the solid fuel and the bed particles. In order to increase the mixing of the solid fuel with the sulfur-fixing bed material, the first part of the bed may have a region which may be adjacent to the second part of the bed and which is less fluidised than elsewhere in the first bed part so as to cause bed solids, including "floating" solid fuel material, to circulate downwardly in that region before circulating upwardly elsewhere in the first bed part, thereby to increase the residence time of the solid fuel in the first bed part and also to increase its contacting time with sulfur-fixing bed solids below the top surface of the bed. The circulation of the solid fuel within the body of the bed in the first bed part enhances the retention of sulfur moieties therein from any volatile substances in the fuel and also enhances the degree of (partial) combustion of the solid fuel in the bed to hot combustible gases.

Thus, the method of the invention may comprise promoting a downflow of particles in a region of the first bed part adjoining the second bed part whereby to promote an upflow of particles in another region of the first bed part, and the apparatus of the invention may comprise means adapted for reducing the upward velocity of gas in a region of the first bed volume part adjoining the second bed volume part for promoting a downflow of bed particles in said region and an upflow of bed particles in another region of the first bed volume part.

Preferably, the said particles outlet means comprises an underflow weir or port below the said top level and disposed for receiving bed particles from a region of the second bed volume part which region is at a position providing for a sufficiently long particle residence time in the second bed volume part for substantially complete combustion of combustible fuel material associated and/or mixed with bed particles which pass to the second bed volume part. Thus, substantially the full heat value of the combustible fuel material is realised in the second bed volume part, during operation, and in addition, any sulfide materials such as CaS are converted to the innocuous $CaSO_4$.

The containing means of the apparatus may define a space for receiving combustible gas phase materials produced in the first bed volume part and wherein, during operation, substantially complete combustion of at least some of the combustible gas phase materials is effected, and there may be provided suitable means for recovering heat from hot gas produced by said substantially complete combustion of combustible gas phase materials in said space.

It will be appreciated from the foregoing description that the fluidized bed volume is arranged with the first part thereof at an upstream region of the apparatus and the second part thereof at a downstream region, and that during operation, fuel and bed particles are added continuously or intermittently to the first part, and bed particles removed or discharged from the second part continuously or intermittently.

Preferably, the fuel is added to the upstream end of the first bed volume part.

In the first bed volume part (i.e., at the upstream region), it is preferred to maintain the bed temperature in the range of from 800—900°C, e.g. 850 to 970°C, preferably about 900°C, and in the second part (i.e., in the downstream region), temperatures of about 875°C or lower are preferred to avoid the liberation of sulfur oxide(s) from the oxidation-reaction of CaS, although higher temperatures of up to 1000°C may be employed provided the partial pressure of oxygen in the gases above the downstream bed region is at least sufficient to supress sulfur oxide(s) liberation; at up to 1000°C, the oxygen content should be at least 0.1% by volume.

Preferably, fluid fuel is passed into the first bed volume part at a level between the said first level i.e., approximately the level of the first distributor) and the top level of the bed volume, more preferably between the first level and the said second distributor). Solid and semi-solid fuel may also be passed into the first bed volume at the same or similar levels as fluid fuels, but it may be more convenient, in at least some instances, to distribute such fuels onto the top surface of the first part of the bed.

The invention is now further described with reference to the accompanying drawings which show, by way of non-limitative examples, the principal features of two embodiments thereof, and in which:

Figure 1 is a side elevation of a vertical cross-section, in the plane of line A—A of Figure 2, of a horizontal smoke-tube boiler;

Figure 2 is a plan view of a horizontal cross-section, in the plane of line B—B of Figure 1, of the boiler of Figure 1;

Figure 3 is a side elevation of a vertical cross-section, in the plane of line C—C of Figure 4, of a vertical smoke-tube boiler; and

Figure 4 is a plan view of a horizontal cross-section, in the plane of line D—D of Figure 3, of the boiler of Figure 3.

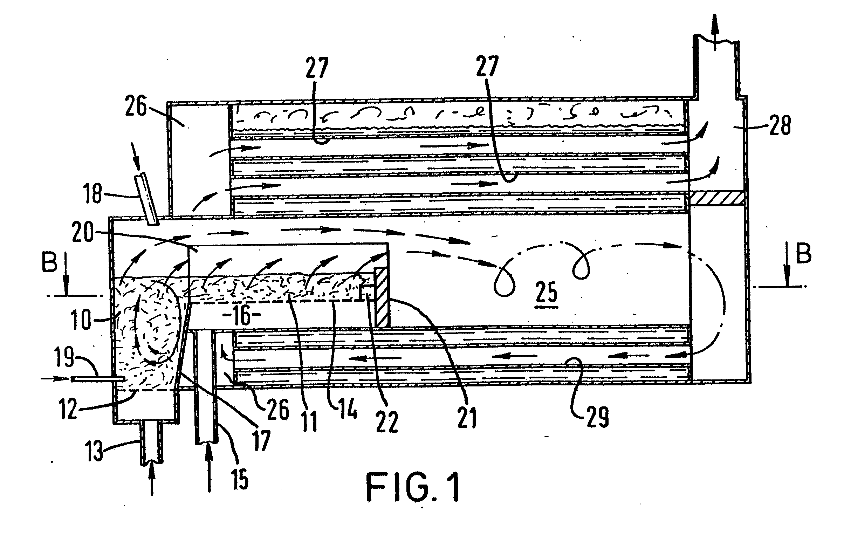

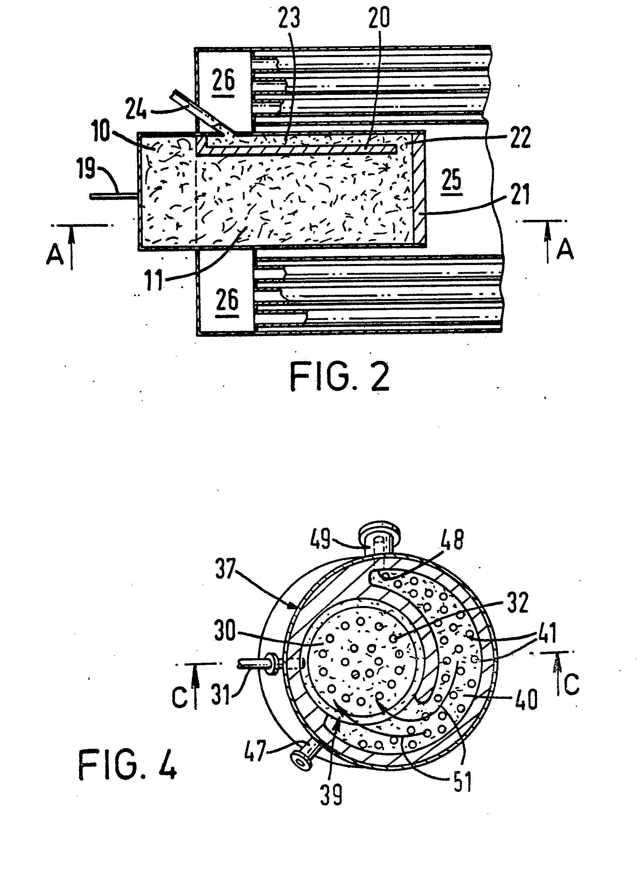

Referring to Figures 1 and 2 of the drawings, there is shown a bed of particles fluidized by air, which bed is divided into an upstream deep bed 10 preferably at least 60 cms, e.g. 70 cms deep and a downstream shallow bed 11 which may preferably be about 20 cms deep or less. The deep bed 10 contains particles comprising calcium oxide or a source thereof (e.g. $CaCO_3$ or dolomite) and is supported by an air distributor 12 for distributing air supplied from a conduit 13. The shallow bed 11 is supported by an air distributor 14 at a level above the level of distributor 12 for distributing air supplied from a conduit 15 and a plenum 16 beneath the distributor 14. At an intermediate region, the downstream end wall 17 of deep bed 10 slopes upwardly towards the distributor of shallow bed 11 so that relatively little fluidising air (and gases produced in the bed 11) passes into the bed material above the sloping wall. As a result, bed material is relatively unfluidized in regions of the bed 10 vertically above the wall 17 and the bed material circulates downwardly in the vicinity of the sloping wall 17 and causes a net upward bed circulation elsewhere in the bed 10, as indicated by the arrows. Solid fuel is passed to the bed 10 conveniently from one or more overhead feed tubes 18, and is downwardly circulated into the bed 10 by the downflowing bed material. Liquid or gaseous fuel is preferably passed directly into the bed 10 via one or more injectors 19 at a level e.g. between 5 and 10 cms, above the distributor 12 (i.e. about 60 cms below the top surface of the bed 10). In some instances, it may be convenient to inject solid fuel via such injectors, either pneumatically or as a slurry in a suitable liquid. The air:fuel ratio is regulated or controlled to be such that the fuel is only partly burned; preferably at a temperature of about 900°C. In the case of coal fuel, the amount of air is preferably in the range 30 to 40% of stoichiometric, and in the case of oil fuel, the air is preferably in the range of 20 to 30% of stoichiometric. The gases in the space above the bed 10 will comprise, inter alia, CO, $H_2$ and light hydrocarbons, but will be substantially sulfur-free, the fuel sulfur having been fixed in the bed particles as CaS by reaction with CaO under the overall reducing conditions in the deep bed 10. The bed 11 is laterally confined on one side by a baffle 20 and at the downstream end by a wall 21. A submerged port 22 is provided at the downstream end of the baffle 20, and a solids withdrawal channel 23 leading to a solids exit 24 is furnished on the opposite side of the baffle 20 from the bed 11 so that on withdrawing bed solids via said exit 24, solids floating on the surface of the bed 11 cannot pass through the exit port 22. Since such solids will in most cases comprise fuel material, particularly (but not exclusively) char from devolatilised, partly gasified coal from the bed 10, the solids will remain in the bed 11 until consumed. With oil fuel, the solids in bed 11 have a carbonaceous coating amounting to about 0.5 wt.% of the solids entering bed 11, and the coating is readily oxidized at the operating conditions of bed 11. The air:fuel ratio in the bed 11 should preferably be at least sufficient for complete oxidation of fuel material therein at a temperature of about 850°C and for conversion of CaS from bed 10 to $CaSO_4$ without the liberation of sulfur oxide(s), and additionally, in the illustrated embodiment, for burning the combustible materials in the gases produced in the bed 10. The oxygen-containing gases leaving the bed 11 will be at about 850°C and will mix with and ignite the combustible materials in the gases both above the bed 11 and in the chamber 25 downstream thereof. The resulting hot combustion gases are conducted around and under the chamber 25 via smoke tubes 29 (of which only one is shown) surrounded by water in heat exchange relationship therewith, and then upwardly via plenum 26 into smoke tubes 27 in heat exchange relationship with water above and around the chamber 25. The combustion gases are exhausted to a smoke box 28 for discharge to atmosphere via a stack (not shown).

The inventory of sulfur-fixing bed solids may be maintained in any convenient way. For example, particles comprising CaO or a precursor thereof (e.g. limestone or dolomite) may be passed into the bed, 10, e.g. from overhead feed tube(s) 18 either alone, or if solid fuel is being used, in admixture with the fuel.

It is contemplated that in the boiler as illustrated, the plan area of the top of the bed 10 may be about 20% of the total plan area of the beds 10 and 11 together. As depicted, the upstream bed 10 projects from the upstream end of the remainder of the boiler, but this is not a necessary feature, and the bed 10 may be within the boiler shell.

In a modification (not shown), the baffle 20 may be extended to the upstream end of the boiler and the bed solids exit 24 may conveniently be on the upstream face of the boiler.

In a further modification (not shown), wherein it is desired to use the substantially sulfur-free hot combustible gases produced from bed 10, there may be a suitable baffle (not shown) extending across the space where the bed 10 adjoins bed 11 with a suitable conduit (not shown) for recovering and conducting at least some of the hot combustible gases separately from the gases produced in the bed 11, which latter gases are burned in the chamber 25, if they are combustible.

In yet a further modification (not shown) combustible gases may be burned immediately above the bed 10 by providing suitable secondary or tertiary combustion air in the space above the bed. Such provision could provide for increased turn-down facilities at least in the bed 10.

The foregoing embodiment may be employed with any one or more of the described modifications in any technically feasible arrangement or combination without departing from the scope of the invention. The manner in which the aforesaid modifications or combinations thereof may be effected will be clear to those skilled in the art.

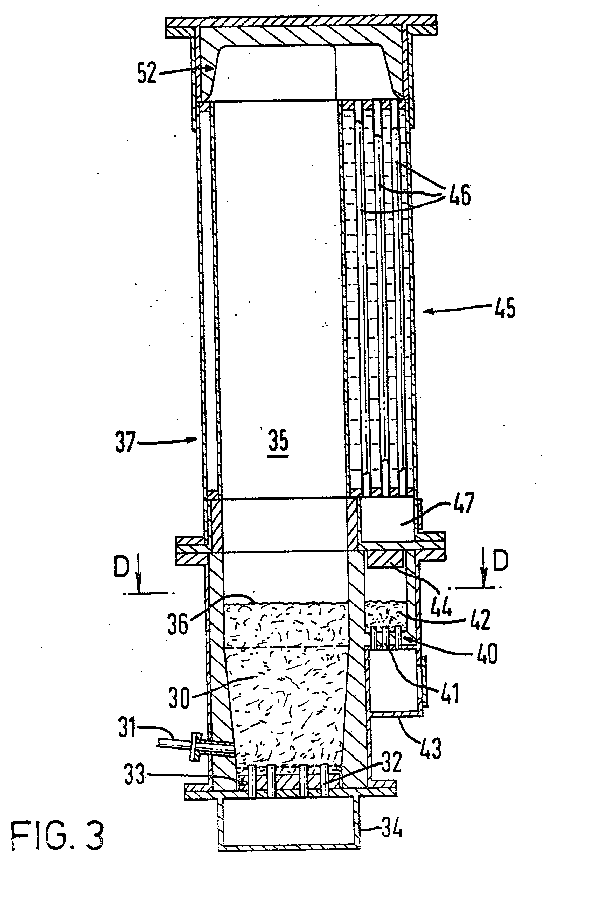

Reference is now made to the embodiment of Figures 3 and 4.

Fuel is passed into a deep bed portion 30 of the fluidized bed via injector 31, and the particles of bed 30 are fluidized by passing air (or other suitable part-combustion gas) upwardly into the bottom of bed 30 from air nozzles 32 of an air distributor generally indicated by reference 33, from an air chest 34. The top of the distributor 33 (i.e. the bottom of the bed 30) is from 5 to 10 cms below the level at which fuel enters the bed 30 from the fuel injector 31. The bed particles comprise calcium oxide or a source thereof and the amount of air supplied to the bed 30 is substoichiometric relative to the amount of fuel supplied thereto but sufficient to partially burn the fuel in the bed 30 at a temperature in the range 800—1100°C, e.g. from 850—950°C, for example about 900°C, with the liberation of combustible fuel gas into the space 35 above the top level 36 of the bed 30 and the retention in the bed of fuel material which has not been consumed (e.g. coal char particles when the fuel is coal and a coat of carbonaceous material on the bed particles when the fuel is a fluid fuel). Most fuels contain sulfur, and most of the sulfur is also retained in the bed 30 by reaction with the CaO therein to form CaS under the overall reducing conditions.

It will be seen that the bed 30 is contained in the bottom of a multi-part vessel 37 which defines a volume for the bed which is cylindrical from the top level 36 to a lower level, and then downwardly tapering to the air distributor 33. Fluidizing gas tends to pass directly upwards through the bed 30 from the distributor to the top level thereof without much lateral diffusion, and accordingly, the bed particles adjacent to the tapering sides are not as aerated as the articles which are above the distributor 33. As result, particles tend to circulate downwards when adjacent to the inwardly tapered sides. The circulation of particles downwards at the sides and then upwards above the distributor enhances the part-combustion of fuel in the bed by repeatedly exposing the fuel material to part-combustion gas thereby, in effect, increasing its residence time in the bed 30.

As will be seen from Figure 4, the cylindrical wall surrounding the top of the bed 30 has a gap 39 therein which enables particles from the deep bed portion 30 to pass into a shallow bed space whose bottom is defined by a substantially crescent-shaped air distributor 40 having air nozzles 41 therein which distributes air upwardly into the shallow bed portion 42 which is formed thereabove from an air chest 43 below the distributor 40. The gap 39 is also of sufficient height to provide a space above the particles in the gap for the passage of gases through the gap 39.

The depth of the shallow bed 42 is from 15 to 25 cms, preferably about 20 cms, and the depth of the bed 30 is 65 to 75 cms, e.g. about 70 cms.

The top of the space in which bed 42 is contained is closed by a refractory roof member 44. Above the refractory roof member 44 is a vertical multi-pass smoke-tube boiler generally indicated by reference 45. Figure 3 shows only one downward pass of smoke tubes 46 extending to a lower smoke box 47, the upper smoke box not being illustrated. Those familiar with the boiler field will appreciate the general mode of construction of the boiler 45 from what is shown in Figure 3.

As will be seen from Figure 4, a particles feed nozzle 47 is provided for supplying particles to the bed 30, and at the opposite end of the crescent of bed 40 from the gap 39 is an outlet orifice 48, below the top level 36 of the shallow bed, communicating with a particles discharge tube 49.

The mode of operation of the boiler of Figures 3 and 4 is as follows:—

The volume for the bed portions 30 and 42 is filled with fluidizable particles, preferably limestone, and fuel, e.g. coal particles and/or fuel oil (which may be in the form of a coal-oil slurry) is injected into the bed 30 from injector 31. The bed 30 is brought to an operating temperature of about 900°C in any conventional way (e.g. by burning a combustible gas in or above the bed before and/or after an initial charge of fuel has been injected into the bed 30, combustion air being supplied from the distributor 33). Air is passed into the bed 30 at a rate is substoichiometric relative to the fuel but adequate to maintain the operating temperature so that fuel is partially combusted in the bed 30 with the fixing of a major proportion of the sulfur of the fuel in the bed by reaction with the CaO to form CaS under the overall reducing conditions prevailing in the bed 30. Bed particles are withdrawn from bed 42 via discharge tube 49 and fresh bed particles are added via feed nozzle 47 to maintain the level 36 at a substantially constant height. The addition of particles to bed 30 and the removal of particles from bed 42 causes particles to pass from bed 30 to bed 42. The downward circulation of particles in the bed 30, as indicated by the arrows therein causes combustible material to be exposed to air over an extended residence time thereby increasing the proportion of fuel which is converted to combustible gas compared with the proportion that might otherwise have been obtained in the absence of the sloping containing wall promoting such downward circulation. The particles that pass from bed 30 to bed 42 via the gap 39 comprise unreacted bed particles, CaS, combustible material (e.g. coal char particles and/or thin carbonaceous coatings on bed particles) and non-reactive solids, e.g. ash, introduced with the fuel or bed particles.

The particles in bed 42 are fluidized with air preferably in excess of that required to oxidize CaS to $CaSO_4$ and the substantially complete oxidation of combustible material in the bed 42 generating sufficient heat to maintain the temperature in bed 42 at up to 1100°C provided the oxygen content of the gas is sufficiently high to prevent the conversion of CaS to CaO with the liberation of sulfur oxide (e.g. $SO_2$). In practice, it is preferred to supply sufficient air, optionally diluted with e.g. recycled flue gas and/or steam, to maintain the temperature in the bed 42 at about 900°C, the gases leaving the top of the bed 42 being at about 900°C and containing sufficient oxygen to burn at least some of the combustible gas phase materials produced in bed 30.

Carbonaceous materials coated on particles during part combustion of liquid fuels are readily oxidized in bed 42 and in this case, the particles withdrawn from the bed via discharge tube 49 are substantially free of combustible substances, and sulfur removed from the fuel is present in the particles thus removed as $CaSO_4$. Solid fuels passed to bed 30 tend to provide carbonaceous particles (e.g. char) which pass to bed 42 where their physical properties cause them to concentrate towards the top level of bed 42, so that particles removed from the submerged outlet part 48 are substantially free of such carbonaceous particles, the latter remaining in bed 42 until they are consumed and/or are elutriated into the dilute phase above bed 42.

The hot oxygen-containing gases above bed 42, which may contain elutriated carbonaceous and other fine solids, pass through the gap 39, as indicated by the arrows 51, into the space 35 above the top level 36 of bed 30, and furnish oxygen for the combustion of the combustible gases produced in the bed 30, and also for the combustion of elutriated combustible solids. The resulting hot combustion gases pass upwardly to the top of space 35, which is closed by a refractory-lined end member generally indicated by 52, and directed by a suitable baffle, into the downward pass smoke tubes 46 which are surrounded by pressurized water in the manner conventional of vertical smoke-tube boilers. The hot gases collect in part of the bottom smoke box 47 and then circulate to a bank of upward pass smoke tubes (not shown) again in the conventional manner, in heat exchange relationship with pressurized water. The thus heated pressurized water circulates in the conventional manner to a steam separation drum (not shown) and non-vaporized water is returned with additional feed water, under pressure, back to the boiler.

In all embodiments of the invention, an increase in the concentration of CaS in the part-combustion bed causes a tendency for the temperature in the latter bed to fall and for the temperature in the oxidizing bed to rise. This tendency can be checked to some extent by increasing the air flow to both beds, but there will then be a corresponding reduction in boiler efficiency. It will be appreciated, therefore that there is an optimum bed-particles sulfur concentration determining the rate of removal of bed particles and the rate of fresh bed particles addition. The rate of bed particles throughput can easily be found for each embodiment of the invention by suitable experiments and trial runs.

The invention enables fluid fuels to be burned in shallow fluidized bed boilers and in addition or alternatively for solid fuels to be burned in such boilers, with high efficiency and with the elimination or substantially reduction of at least some pollutant normally found in the flue gas discharged from boilers. Moreover, the invention is applicable to relatively small boiler installations having a heat output in the range most commonly employed in industry, and to some extent, in commercial heating installations.

Obviously, features of the embodiment of Figures 3 and 4 can be employed in the embodiment of Figures 1 and 2, and vice versa, without departing from the invention.

Claims

1. A method of at least partially burning a solid, semi-solid and/or fluid fuel employing a fluidized bed of particles in which the fluidized bed (10, 11, Fig. 1, 30, 42, Fig. 3) has a first part (10 or 30) which is relatively deep and is fluidized by a first combustion-supporting gas (from 13, Fig. 1, or 34, Fig. 3) and a second part (11 or 42) which is relatively shallow and fluidized by a second combustion-supporting gas (from 15, Fig. 1 or 41, Fig. 3), the method comprising passing the fuel (from 18 and/or 19, Fig. 1 or 31, Fig. 3) to the said first part (10 or 30) of the bed in a stoichiometric excess relative to the first combustion-supporting gas so that the fuel is partially combusted within the first part (10 or 30) of the fluidized bed at an elevated part-combustion temperature with the production of combustible gas phase materials above the said first part of the bed, characterized in that the top levels of the first and second parts of the fluidized bed are at substantially the same level and wherein said partial combustion within the first part (10 or 30) of the bed additionally produces non-volatile combustible fuel material associated with and/or mixed with the bed particles in the first part (10 or 30) of the bed, and wherein the method further comprises causing particles to pass from the said first part (10 or 30) of the bed to the second part (11 or 42) of the bed, furnishing the second combustion-supporting gas (from 15, Fig. 1 or 41, Fig. 3) to the said second part of the bed in at least the stoichiometric amount for substantially complete combustion of non-volatile combustible fuel material associated with and/or mixed with the bed particles which have been caused to pass from the first part (10 or 30) of the bed to the second part (11 or 42) of the bed so that the said non-volatile fuel material is substantially completely burned in the second part (11 or 42) of the bed at an elevated fuel burning temperature.

2. A method according to claim 1, characterized in that at least some of the combustible gas phase materials from above the top level of the first part (10) of the bed are mixed with combustion supporting gas for substantially completely burning at least some of the combustible gas phase materials.

3. A method according to claim 1 or claim 2 characterized in that bed particles are withdrawn or discharged from below the top level of the second part of the bed (via 22, Fig. 1 and 24, Fig. 2) and particles are added (via 18, Fig. 1) to the first part of the bed to maintain the top level at a substantially constant height.

4. A method according to any one of claims 1 to 3 characterized in that the fuel passed to the first part (10) of the bed is a sulfur-comprising fuel and in which the particles in the first part of the bed comprise calcium oxide at the operating conditions of the first bed part (10) whereby at least some of the sulfur of the fuel is fixed in the particles in the first bed part (10) as calcium sulfide, and the temperature of the second bed part (11) is regulated to be such that calcium sulfide in particles which pass to the second bed part (11) is converted to calcium sulfate with substantially no liberation of sulfur oxide.

5. A method according to any one of claims 1 to 4 characterized by comprising promoting a downflow of particles in a region (by wall 17 Fig. 1) of the first bed part (10) adjoining the second bed part (11) whereby to promote an upflow of particles in another region of the first bed part (10).

6. Apparatus for carrying out the method according to claims 1 to 5 for at least partially burning a solid, semi-solid and/or fluid fuel employing a fluidized bed of particles, comprising containing means defining a volume for containing a bed of fluidizable particles, a first distributor (12, Fig. 1; 33, Fig. 3) for passing a first combustion-supporting gas into a first part (10, Fig. 1; 30, Fig. 3) of the bed volume at a first level of the apparatus, a second distributor (14, Fig. 1; 40, Fig. 3) for passing a second combustion-supporting gas into a second part (11, Fig. 1; 42 Fig. 3) of the bed volume at a second level of the apparatus above the first level, and means (18, 19, Fig. 1; 31, Fig. 3) operable for passing fuel to the first part of the bed volume in a stoichiometric excess relative to the first combustion-supporting gas so that, during operation, the fuel is partially burned in the first part (10 or 30) of the bed volume to produce combustible gas phase materials, characterized by the combination comprising means (22, 23, Fig. 2; 48, 49, Fig. 4) for defining or regulating the height of the top level (e.g. 36, Fig. 3) of the bed volume so that the top levels of the first and second parts of the bed volume are substantially at the same height whereby, during operation, the partial combustion of fuel in the first part (10 or 30) of the bed volume produces combustible gas phase materials above the said top level (e.g. 36) of the said first bed part (10 or 30), means (18, 22, Fig. 1; 47, 48, 49, Fig. 4) operable for causing particles to pass from the first bed volume part (10 or 30) to the second bed volume part (11 or 42), and gas regulating means operable for regulating the rate of supply of second combustion-supporting gas to the second bed volume part for substantially completely burning therein non-volatile fuel material associated and/or mixed with bed particles which have been caused to pass from the first bed volume part (10 or 30) to the second bed volume part (11 or 42).

7. Apparatus according to claim 6 characterized by comprising means (17, Fig. 1) adapted for reducing the upward velocity of gas in a region of the first bed volume part adjoining the second bed volume part for promoting a downflow of bed particles in said region and an upflow of particles in another region of the first bed volume part.

8. Apparatus according to claim 6 or claim 7, characterized in that the said particles outlet means (48, 49, Fig. 4) comprises an underflow weir or port (48) below the said top level (36) and disposed for receiving bed particles from a region of the second bed volume part (42) which region is at a position providing for a sufficiently long particle residence time in the second bed volume part (42) for substantially complete combustion of combustible fuel material associated and/or mixed with bed particles which pass to the second bed volume part (42).

9. Apparatus according to any one of claims 6 to 8 characterized in that the containing means defines a space (25, Fig. 1 or 35, Fig. 3) for receiving combustible gas phase materials produced in the first bed volume part and wherein, during operation, substantially complete combustion of at least some of the combustible gas phase materials is effected.

10. Apparatus according to claim 9 characterized by comprising means (45, 46, Fig. 3) for recovering heat from hot gas produced by said substantially complete combustion of combustible gas phase materials in said space (35).

## Revendications

1. Procédé pour brûler au moins partiellement un combustible solide, semi-solide et/ou fluide en utilisant un lit fluidisé de particules dans lequel le lit fluidisé (10, 11, figure 1; 30, 42, figure 3) comporte une première partie (10 ou 30) qui est relativement profonde et qui est fluidisée par un premier gaz d'entretien de combustion (provenant de 13, figure 1, ou de 34, figure 3) et une seconde partie (11 ou 42) qui est relativement peu profonde et qui est fluidisée par un second gaz d'entretien de combustion (provenant de 15, figure 1 ou de 41, figure 3), ledit procédé consistant à faire passer le combustible (provenant de 18 et/ou de 19, figure 1 ou de 31, figure 3) dans ladite première partie (10 ou 30) du lit avec un excès stoechiométrique par rapport au premier gaz d'entretien de combustion de façon que le combustible soit partiellement brûlé dans la première partie (10 ou 30) du lit fluidisé à une température de combustion partielle élevée, avec production de matières combustibles en phase gazeuse au-dessus de la première partie du lit, caractérisé en ce que les niveaux supérieurs de la première et de la seconde partie du lit fluidisé sont essentiellement au même niveau et en ce que ladite combustion partielle dans la première partie (10 ou 30) du lit produit additionnellement une matière combustible non volatile associée et/ou mélangée avec les particules de la première partie (10 ou 30) du lit, et en ce que le procédé consiste en outre à faire passer des particules de la première partie (10 ou 30) du lit dans la seconde partie (11 ou 42) du lit, à introduire le second gaz d'entretien de combustion (provenant de 15, figure 1 ou de 41, figure 3) dans ladite seconde partie du lit au moins en quantité stoechiométrique pour assurer une combustion essentiellement complète de la matière combustible non volatile associée et/ou mélangée avec les particules du lit qu'on a fait passer de la première partie (10 ou 30) du lit dans la seconde partie (11 ou 42) du lit afin que ladite matière combustible non volatile soit essentiellement complètement brûlée dans la seconde partie (11 ou 42) du lit à une température élevée de brûlage de combustible.

2. Procédé selon la revendication 1, caractérisé en ce qu'au moins une certaine partie des matières combustibles en phase gazeuse provenant du dessus du niveau supérieur de la première partie (10) du lit est mélangée avec un gaz d'entretien de combustion en vue du brûler essentiellement complètement au moins une partie des matières combustibles en phase gazeuse.

3. Procédé selon l'une des revendications 1 ou 2, caractérisé en ce que des particules du lit sont évacuées ou déchargées de dessous le niveau supérieur de la seconde partie du lit (par l'intermédiaire de 22, figure 1, et de 24, figure 2) et en ce que des particules sont ajoutées (par l'intermédiaire de 18 figure 1) dans la première partie du lit pour maintenir le niveau supérieur à une hauteur essentiellement constante.

4. Procédé selon l'une quelconque des revendications 1 à 3, caractérisé en ce que le combustible passant dans la première partie (10) du lit est une combustible contenant du soufre en ce que les particules se trouvant dans la première partie du lit comprennent de l'oxyde de calcium aux conditions de fonctionnement de la première partie de lit (10) de façon qu'au moins une partie du soufre du combustible soit fixée dans les particules se trouvant dans la première partie du lit (10) sous la forme de sulfure de calcium, et en ce que la température de la seconde partie de lit (11) est réglée de telle sorte que le sulfure de calcium contenu dans les particules qui passent dans la seconde partie de lit (11) soit converti en sulfate de calcium, essentiellement sans libération d'oxyde de soufre.

5. Procédé selon l'une quelconque des revendications 1 à 4, caractérisé en ce qu'on favorise un écoulement descendant de particules dans une zone (définie par la paroi 17 figure 1) de la première partie de lit (10) adjacente à la seconde partie de lit (11) en vue de promouvoir en écoulement ascendant de particules dans une autre zone de la première partie de lit (10).

6. Appareil pour la mise en oeuvre de procédé selon l'une quelconque des revendications 1 à 5, afin de brûler au moins partiellement un combustible solide, semi-solide et/ou fluide en utilisant un lit fluidisé de particules, l'appareil comprenant un réceptacle définissant un volume destiné à contenir un lit de particules fluidisables, un premier distributeur (12, figure 1; 32, figure 3) pour faire passer un premier gaz d'entretien de combustion dans une première partie (10, figure 1; 30, figure 3) du volume de lit à un premier niveau de l'appareil, un second distributeur (14, figure 1; 40, figure 3) pour faire passer un second gaz d'entretien de combustion dans une seconde partie (11, figure 1; 42; figure 3) du volume de lit à un second niveau de l'appareil situé au-dessus du premier niveau, et des moyens (18, 19, figure 1; 31, figure 3) pouvant être actionnés de façon à faire passer du combustible dans la première partie du volume de lit avec un excès stoechiométrique par rapport au premier gaz d'entretien de combustion de telle sorte que, en service, le combustible soit partiellement brûlé dans la première partie (10 ou 30) du volume de lit pour produire des matières combustibles en phase gazeuse, caractérisé en ce qu'il comprend en combinaison des moyens (22, 23, figure 2; 48, 49, figure 4) pour définir ou régler le hauteur du niveau supérieur (par exemple 36, figure 3) du volume de lit de telle sorte que les niveaux supérieurs des première et seconde parties du volume de lit soient essentiellement à la même hauteur afin que, en service, la combustion partielle du combustible dans la première partie (10 ou 30) du volume de lit produise des matières combustibles en phase gazeuse au-dessus dudit niveau supérieur (par exemple 36) de ladite première partie de lit (10 ou 30), des moyens (18, 22, figure 1; 47, 48, 49, figure 4) pouvant être actionnés pour faire passer des particules de la première partie du volume de lit (10 ou 30) dans la seconde partie de volume de lit (11 ou 42), et des moyens de régulation de gaz pouvant être actionnés pour régler le débit du second gaz d'entretien de combustion fourni à la seconde partie de volume de lit en vue de faire brûler essentiellement complètement dans celleci des matières combustibles non volatiles associées et/ou mélangées aux particules de lit qu'on a fait passer de la première partie de volume de lit (10 ou 30) dans la seconde partie de volume de lit (11 ou 42).

7. Appareil selon la revendication 6, caractérisé en ce qu'il comprend des moyens (17, figure 1) agencés pour réduire la vitesse d'écoulement du gaz vers le haut dans une zone de la première partie de volume de lit qui est adjacente à la seconde partie de volume de lit afin de promouvoir un écoulement descendant de particules de lit dans ladite zone et un écoulement ascendant de particules dans une autre zone de la première partie de volume de lit.

8. Appareil selon l'une des revendications 6 ou 7, caractérisé en ce que lesdits moyens de sortie de particules (48, 49, figure 4) comprennent un déversoir ou conduit d'écoulement descendant (48) situé en dessous du niveau supérieur (36) et disposé de manière à recevoir des particules de lit provenant d'une zone de la seconde partie de volume de lit (42), ladite zone étant placée dans une position permettant d'obtenir pour les particules un temps de séjour dans la second partie de volume de lit (42) qui est suffisamment long pour permettre une combustion essentiellement complète des matières combustibles associées et/ou mélangées avec les particules de lit qui passent dans la seconde partie de volume de lit (42).

9. Appareil selon l'une quelconque des revendications 6 à 8, caractérisé en ce que ledit réceptacle définit un espace (25, figure 1 ou 35, figure 3) destiné à recevoir des matières combustibles en phase gazeuse produites dans la première partie de volume de lit et en ce que, en service, une combustion essentiellement complète d'au moins certaines des matières combustibles en phase gazeuse est effectuée.

10. Appareil selon la revendication 9, caractérisé en ce qu'il comprend des moyens (45, 46, figure 3) pour récupérer la chaleur contenue dans les gaz chauds produite par ladite combustion essentiellement complète des matières combustibles en phase gazeuse dans ledit espace (35).

## Patentansprüche

1. Verfahren zur mindestens teilweisen Verbrennung eines festen, halbfesten oder flüssigen Brennstoffs unter Verwendung eines Wirbelbetts, wobei das Wirbelbett (10, 11, Figur 1; 30, 42, Figur 3) einen ersten Teil (10 oder 30), der relativ tief ist und durch ein erstes die Verbrennung förderndes Gas (aus 13, Figur 1 oder 34, Figur 3) aufgewirbelt wird, und einen zweiten Teil (11 oder 42) aufweist, der relativ flach ist und durch ein zweites des Verbrennung förderndes Gas (aus 15, Figur 1 oder 41, Figur 3) aufgewirbelt wird, bei welchem der Brennstoff (aus 18 und/oder 19, Figur 1 oder 31, Figur 3) in einem stöchiometrischen Überschuß bezüglich des ersten die Verbrennung fördernden Gases in den ersten Teil (10 oder 30) des Bettes geleitet wird, so daß der Brennstoff im ersten Teil (10 oder 30) des Wirbelbetts unter Erzeugung von brennbaren Gasphasematerialien oberhalb des ersten Teils des Bettes bei einer erhöhten Teilverbrennungstemperatur teilweise verbrannt wird, dadurch gekennzeichnet, daß sich die Oberflächen des ersten und zweiten Teils des Wirbelbetts im wesentlichen auf der gleichen Höhe befinden, die teilweise Verbrennung im ersten Teil (10 oder 30) des Bettes zusätzlich nicht flüchtiges, brennbares Brennstoffmaterial produziert, das mit den Betteilchen im ersten Teil (10 oder 30) des Bettes assoziiert und/oder gemischt ist, die Teilchen aus dem ersten Teil (10 oder 30) des Bettes in den zweiten Teil (11 oder 42) des Bettes geleitet werden und das zweite die Verbrennung fördernde Gas (aus 15, Figur 1 oder 41, Figur 3) in den zweiten Teil des Bettes in mindestens der stöchiometrischen Menge zur im wesentlichen vollständigen Verbrennung des nicht flüchtigen brennbaren Brennstoffmaterials, das mit den Betteilchen, die aus dem ersten Teil (10 oder 30) des Bettes in den zweiten Teil (11 oder 42) des Bettes geleitet worden sind, assoziiert und/oder vermischt ist, geleitet wird, so daß das nicht flüchtige Brennstoffmaterial im zweiten Teil (11 oder 42) des Bettes bei einer erhöhten Brennstoff-Verbrennungstemperatur im wesentlichen vollständig verbrannt wird.

2. Verfahren nach Anspruch 1, dadurch gekennzeichnet, daß mindestens ein Teil der brennbaren Gasphasematerialien aus dem Bereich oberhalb der Oberfläche des ersten Teils (10) des Bettes mit die Verbrennung förderndem Gas gemischt wird, um mindestens einen Teil der brennbaren Gasphasematerialien im wesentlichen vollständig zu verbrennen.

3. Verfahren nach Anspruch 1 oder 2, dadurch gekennzeichnet, daß Betteilchen unterhalb der Oberfläche des zweiten Teils des Bettes (über 22, Figur 1, und 24, Figur 2) abgezogen und Teilchen (über 18, Figur 1) dem ersten Teil des Bettes Zugesetzt werden, um die Oberfläche auf einer im wesentlichen konstanten Höhe zu halten.

4. Verfahren nach jedem Ansprüche 1 bis 3, dadurch gekennzeichnet, daß der in den ersten Teil (10) des Bettes eingeführte Brennstoff ein schwefelhaltiger Brennstoff ist, die Teilchen im ersten Teil des Bettes bei den Betriebsbedingungen des ersten Teils des Bettes (10) Calciumoxid enthalten, wodurch mindestens ein Teil des Schwefels des Brennstoffs in den Teilchen des ersten Teils des Bettes (10) als Calciumsulfid gebunden werden, und die Temperatur des zweiten Teils des Bettes (11) so reguliert wird, daß das Calciumsulfid in Teilchen, die in den zweiten Teil des Bettes (11) übergehen, im wesentlichen ohne Freisetzung von Schwefeloxid in Calciumsulfat umgewandelt wird.

5. Verfahren nach jedem der Ansprüche 1 bis 4, dadurch gekennzeichnet, daß ein Abwärtsströmen in einem Bereich (durch Wand 17, Figur 1) des ersten Teils des Bettes (10), der an den zweiten Teil des Bettes (11) angrenzt, gefördert wird, wodurch ein Aufwärtsströmen von Teilchen in einem anderen Bereich des ersten Teils des Bettes (10) gefördert wird.

6. Vorrichtung zur Durchführung des Verfahrens nach den Ansprüchen 1 bis 5 zur mindestens teilweisen Verbrennung eines festen, halbfesten und/oder flüssigen Brennstoffs unter Verwendung eines Wirbelbetts, welche Behältermittel, die ein Volumen zur Aufnahme eines Bettes aus aufwirbelbaren Teilchen bilden, einen ersten Verteiler (12, Figur 1; 3, Figur 3) zur Einführung eines ersten die Verbrennung fördernden Gases in einen ersten Teil (10, Figur 1; 30 Figur 3) des Bettvolumens in einer ersten Höhe der Vorrichtung, einen zweiten Verteiler (14, Figur 1; 40 Figur 3) zur Einführung eines zweiten die Verbrennung fördernden Gases in einen zweiten Teil (11, Figur 1; 42 Figur 3) des Bettvolumens in einer zweiten Höhe der Vorrichtung oberhalb der ersten Höhe und Mittel (18, 19, Figur 1; 3, Figur 3) zur Einführung von Brennstoff in den ersten Teil des Bettvolumens in einen stöchiometrischen Überschuß bezüglich des ersten die Verbrennung fördernden Gases aufweist, so daß der Brennstoff im Betrieb unter Bildung brennbarer Gasphasematerialien im ersten Teil (10 oder 30) des Bettvolumens teilweise verbrannt wird, gekennzeichnet durch die Kombination aus Mitteln (22, 23, Figur 2; 48, 49, Figur 4) zur Einstellung oder Regulierung der Höhe der Oberflächen (z.B. 36, Figur 3) des Bettvolumens, so daß sich die Oberflächen des ersten und zweiten Teils des Bettvolumens im wesentlichen auf der gleichen Höhe befinden, wodurch im Betrieb die teilweise Verbrennung des Brennstoffs im ersten Teil (10 oder 30) des Bettvolumens brennbare Gasphasematerialien oberhalt der Oberfläche (z.B. 36) des ersten Betteils (10 oder 30) ergibt, Mitteln (18, 22, Figur 1; 47, 48, 49, Figur 4) zur Überführung der Teilchen aus dem ersten Bettvolumenteil (10 oder 30) in den zweiten Bettvolumenteil (11 oder 42) und Gasreguliermitteln zur Regulierung der Zufuhrgeschwindigkeit des zweiten die Verbrennung fördernden Gases in den zweiten Bettvolumenteil zur darin stattfindenden, im wesentlichen vollständigen Verbrennung von nicht flüchtigem Brennstoffmaterial, das mit den Betteilchen, die aus dem ersten Bettvolumenteil (10 oder 30) in den Zweiten Bettvolumenteil (11 oder 42) geleitet worden sind, assoziiert und/oder gemischt ist.

7. Vorrichtung nach Anspruch 6, dadurch gekennzeichnet, daß sie Mittel (17, Figur 1) zur Verringerung der Aufwärtsgeschwindigkeit des Gases in einem Bereich des ersten Bettvolumenteils, der an den zweiten Bettvolumenteil angrenzt, zur Förderung eines Abwärtsstroms von Betteilchen in diesem Bereich und eines Aufwärtsstroms von Betteilchen in einem anderen Bereich des ersten Bettvolumenteils aufweist.

8. Vorrichtung nach Anspruch 6 oder 7, dadurch gekennzeichnet, daß die Teilchenaustrittsmittel (48, 49, Figur 4) einen Unterströmungsüberlauf oder eine Unterströmungsöffnung (48) unter der Oberfläche (36) aufweisen und zur Aufnahme von Betteilchen aus einem Bereich des zweiten Bettvolumenteils (42) angeordnet sind, wobei sich dieser Bereich in einer Lage befindet, die eine ausreichend lange Teilchenverweilzeit im zweiten Bettvolumenteil (42) für die im wesentlichen vollständige Verbrennung des brennbaren Brennstoffmaterials, das mit den Betteilchen, die in den zweiten Bettvolumenteil (42) eintreten, assoziiert und/oder gemischt ist, liefert.

9. Vorrichtung nach jedem der Ansprüche 6 bis 8, dadurch gekennzeichnet, daß die Behältermittel einen Raum (25, Figur 1 oder 35, Figur 3) zur Aufnahme von im ersten Bettvolumenteil erzeugten, brennbaren Gasphasematerialien ausbilden, in welchem im Betrieb mindestens ein Teil der brennbaren Gasphasematerialien im wesentlichen vollständig verbrannt wird.

10. Vorrichtung nach Anspruch 9, dadurch gekennzeichnet, daß sie Mittel (45, 46, Figur 3) zur Gewinnung von Wärme aus dem heißen Gas aufweist, das durch die im wesentlichen vollständige Verbrennung von brennbaren Gasphasematerialien in dem Raum (35) erzeugt worden ist.

FIG. 1

0001 358

FIG. 2

FIG. 4

FIG. 3